Europäisches Patentamt

**European Patent Office**

**Office européen des brevets**

(19)

(11) Numéro de publication : **0 224 957**
**B1**

(12)

# FASCICULE DE BREVET EUROPÉEN

(45) Date de publication du fascicule du brevet :
**07.03.90**

(21) Numéro de dépôt : **86202058.3**

(22) Date de dépôt : **20.11.86**

(51) Int. Cl.⁵ : **G 06 F 15/70, H 04 N 5/14**

(54) **Procédé et dispositif d'estimation de mouvement dans une sequence d'images.**

(30) Priorité : **22.11.85 FR 8517303**

(43) Date de publication de la demande :
**10.06.87 Bulletin 87/24**

(45) Mention de la délivrance du brevet :
**07.03.90 Bulletin 90/10**

(84) Etats contractants désignés :
**AT DE FR GB IT**

(56) Documents cités :
**COMPUTER VISION, GRAPHICS, AND IMAGE PRO-
CESSING, vol. 21, no. 2, février 1983, pages 262-279,
Academic Press, Inc., New York, US; M. YACHIDA:
"Determing velocity maps by spatio-temporal
neighborhoods from image sequences"**

(73) Titulaire : **LABORATOIRES D'ELECTRONIQUE PHI-
LIPS**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB IT AT**

(72) Inventeur : **Haghiri, Mohammad RezaöSocit Civile
S.P.I.D.**
**209, rue de l'Universit**
**F-75007 Paris (FR)**

(74) Mandataire : **Landousy, Christian et al
Société Civile S.P.I.D. 209, Rue de l'Université
F-75007 Paris (FR)**

EP 0 224 957 B1

**Description**

La présente invention concerne un procédé et un dispositif d'estimation de mouvement dans une séquence d'images. Une telle invention est applicable essentiellement dans le domaine du traitement de signal numérique, pour la réalisation de fonctions telles que compression d'information, amélioration de qualité d'images, poursuite de cibles, etc. et, par exemple, dans des dispositifs de codage d'images numériques, pour la réduction du débit des informations à transmettre, ou à enregistrer lorsqu'il s'agit par exemple de magnétoscopes.

L'article de A.N. Netravali et J.D. Robbins, « Motion-Compensated Television coding : Part I », paru dans la revue « The Bell System Technical Journal », volume 58, n°.3, mars 1979, décrit un procédé d'estimation de mouvements qui prévoit essentiellement d'opérer une classification des éléments d'image en éléments fixes et en éléments mobiles, et d'estimer les mouvements à l'aide d'une méthode de prédiction adaptative utilisant des éléments d'une image précédente pour les comparer, en position et en luminosité, à ceux de l'image courante. Ce procédé présente cependant de notables inconvénients. D'une part, en ce qui concerne le mouvement, il ne tient pas compte de la corrélation entre points voisins. Par ailleurs, dans le classement opéré, on n'examine pas l'influence de la classification relative à des points d'image déterminés sur celle des points suivants.

Le but de l'invention est de proposer un procédé d'estimation de mouvement dans une séquence d'images remédiant à de tels inconvénients.

L'invention concerne à cet effet un procédé remarquable en ce que, la luminosité de chaque point étant exprimée de façon numérique et chacun de ces points étant défini par deux coordonnées (m, n) indiquant respectivement le rang de la ligne de l'image où se trouve le point et le rang du point sur cette m-ième ligne, il consiste à :

(A) prévoir par rapport à l'image courante la sauvegarde de l'image précédente pour constituer une image de référence ;

(B) définir pour les points trois groupes de classification en points fixes, en points mobiles et en points dits découverts, groupes dans lesquels les points vont, avec un retard de L points, être classés au fur et à mesure du balayage de l'image, en examinant un nombre déterminé de séquences de groupes possibles pour les L points qui suivent le point courant X considéré et selon un critère de classification déterminé, ledit critère étant, pour les points fixes et mobiles, la différence de luminosité entre deux images successives, en tenant compte du déplacement des points d'une image à l'autre pour les points mobiles, et, pour les points découverts, la différence de luminosité entre deux lignes adjacentes ;

(C) construire un arbre de classification dont les $3^L$ branches, à chaque niveau successif, sont en nombre égal à celui des groupes possibles et correspondent, du premier au L-ième niveau, aux séquences des groupes possibles pour les L points successifs considérés de la séquence d'images ;

(D) associer à chaque branche de chaque niveau deux paramètres :

(a) un premier paramètre dit vecteur de déplacement, représentatif du déplacement éventuel du point par rapport à l'image ou à la ligne précédente et déterminé à l'aide d'une méthode récursive d'estimation de déplacement ;

(b) un deuxième paramètre dit distorsion cumulée, représentatif de la somme cumulée des erreurs de classification des points précédents, les groupes de ces points étant ceux des branches de l'arbre parcourues pour arriver à la branche courante, chaque erreur de classification étant rendue minimale en tenant compte de l'influence d'un déplacement estimé pour un point sur le déplacement estimé pour les L points suivants, et ladite influence n'étant examinée, parmi les $3^L$ branches possibles de l'arbre, que pour M branches de plus faible distorsion cumulée, dites survivantes, M étant un nombre limite choisi nettement inférieur au nombre maximal de branches $3^L$ ;

(E) au terme de cette procédure portant sur L points, prendre une décision de type majoritaire quant au groupe effectif et au vecteur de déplacement du point situé par rapport au point courant L points plus tôt, ladite décision étant prise en examinant les branches survivantes et en classant chaque point situé L points plus tôt dans le groupe auquel correspond le plus grand nombre de ces branches survivantes, le vecteur de déplacement correspondant étant alors considéré comme le déplacement de ce point situé L points plus tôt, et ladite procédure de décision étant répétée à l'identique sauf pour les L derniers points de la séquence d'images où l'on évite de prendre une décision.

Le procédé ainsi proposé est avantageux en ce sens qu'on propose une classification différente, plus précise, des points d'image, faisant intervenir une catégorie dite de points découverts qui permet la réinitialisation du procédé d'estimation de mouvement à l'emplacement des contours des objets en mouvement. D'autre part, on tient compte de la corrélation éventuelle entre points en attendant l'arrivée d'un nombre déterminé d'éléments binaires pour prendre une décision sur la classe d'un point.

Dans ce procédé, le critère de classification est, pour les points fixes et mobiles, la différence de luminosité entre deux images successives, en tenant compte du déplacement des points d'une image à l'autre pour les points mobiles, et, pour les points découverts, la différence de luminosité entre deux lignes adjacentes, l'erreur de classification étant de préférence rendue minimale en tenant compte de l'influence d'un déplacement estimé pour un point sur le déplacement estimé pour les L points suivants.

Afin de limiter la complexité de mise en œuvre du procédé cette influence n'est examinée, parmi les 3$^L$ branches possibles de l'arbre, que pour M branches de plus faible distorsion cumulée, dites survivantes, M étant un nombre limite choisi nettement inférieur au nombre maximal de branches.

La décision de type majoritaire est prise en examinant les branches survivantes et en classant chaque point situé L points plus tôt dans le groupe auquel correspond le plus grand nombre de ces branches survivantes, le vecteur de déplacement correspondant étant alors considéré comme le déplacement de ce point situé L points plus tôt, et ladite procédure de décision étant répétée à l'identique sauf pour les L derniers points de la séquence d'images où l'on évite de prendre une décision.

L'invention concerne également, pour la mise en œuvre de ce procédé, un dispositif d'estimation de mouvement dans une séquence d'images remarquable en ce qu'il comprend une mémoire d'image recevant de la connexion d'entrée, par l'intermédiaire d'un circuit à retard d'image, la séquence d'images numérisée, un circuit à retard de ligne recevant également la séquence d'images numérisée, et un estimateur récursif de déplacement, recevant également la séquence d'images numérisée pour actualiser à chaque extension de l'arbre de classification les vecteurs de déplacement relatifs aux nœuds de l'arbre et les envoyer vers un circuit de décision à retardement, lesdits vecteurs étant également envoyés vers la mémoire d'image qui renvoie audit estimateur et audit circuit de décision la luminosité des points homologues du point courant X dans l'image précédente.

Les particularités et avantages de l'invention apparaîtront maintenant de façon plus détaillée dans la description qui suit et dans les dessins annexés, donnés à titre d'exemple et dans lesquels :

la figure 1 montre un exemple d'arbre de classification des points d'une image, dans lequel on opère pour chaque point une distinction entre son appartenance possible à un premier groupe de points fixes, à un deuxième groupe de points mobiles, ou à un troisième groupe dit de points découverts ;

la figure 2 montre un exemple de réalisation d'un dispositif d'estimation conforme à l'invention ;

la figure 3 montre un exemple de réalisation de l'estimateur récursif de déplacement prévu dans le dispositif de la figure 2 ;

la figure 4 montre les quatre points A, B, C, D sur la luminosité desquels on opère pour déterminer celle du point X-DEPi ;

la figure 5 montre un exemple de réalisation du circuit de décision à retardement prévu dans le dispositif de la figure 2 ;

la figure 6 montre un exemple de réalisation du circuit de sauvegarde et de mise à jour prévu dans le circuit de la figure 5.

Dans de nombreuses applications, et notamment dans celle mentionnée plus haut, on est amené à traiter des séquences d'images numérisées et, plus particulièrement, à détecter l'existence de mouvements d'une image à la suivante. Le procédé et le dispositif d'estimation de mouvement qui vont être décrits reposent sur une méthode récursive d'estimation de déplacement, avec décision à retardement afin d'initialiser l'estimateur et améliorer ses performances. On supposera que, pour chacune des images successives, la valeur de la luminance de chaque point d'une image est numérisée et que chacun de ces points est défini par deux coordonnées (m, n), m étant le rang de la ligne de l'image et n le rang du point sur cette m-ième ligne.

Selon l'invention, au fur et à mesure du balayage de l'image les points de celle-ci sont classés, avec un retard de L points, dans l'un des trois groupes suivants :

(a) groupe des points fixes ;

(b) groupe des points en mouvement ;

(c) groupe des points découverts.

Le sens précis de cette classification sera explicité plus loin. On verra également que ladite classification s'effectue pour chaque point en examinant un nombre déterminé de séquences de groupes possibles pour les L points qui suivent le point considéré.

Egalement selon l'invention, à chaque point considéré est associé un vecteur dit de déplacement dont la direction et l'amplitude vont être corrigées d'un point au suivant en fonction du groupe d'un ou de plusieurs points précédents et de l'erreur de classification commise pour ce ou ces points. Cette erreur n'est pas définie de façon identique pour les trois groupes : pour les deux premiers groupes mentionnés, elle est égale à la différence de luminosité du point et de son point homologue dans l'image précédente compte tenu du déplacement qui a eu lieu par rapport à cette image précédente, tandis que pour les points du troisième groupe l'erreur d'estimation est déterminée par la variation de luminosité de l'image courante dans la direction verticale, c'est-à-dire d'une ligne à l'autre.

La classification opérée précédemment repose sur les considérations suivantes. Lorsqu'un objet se déplace dans une image, trois types de points peuvent être distingués :

(a) les points qui se situent dans la partie fixe de l'image, ce sont les points fixes ;

(b) les points qui sont visibles dans deux images successives mais à des emplacements différents, ce sont les points en mouvement ;

(c) les points qui sont devenus visibles après le déplacement de l'objet, ce sont les points qualifiés de découverts. Ces points découverts, qui ne correspondent pas à un point de l'image précédente, possèdent une corrélation spatiale plus forte, leur intensité lumineuse, par exemple, est plus proche de celle de la ligne précédente.

De cette répartition en trois catégories de points, on déduit alors le critère objectif de classification qui sera ici adopté, à savoir pour les deux premiers types de points la différence de luminosité entre deux images successives, en tenant compte du déplacement des points pour les points en mouvement, et pour le troisième type de points la différence de luminosité entre deux lignes adjacentes.

Pour être efficace, la méthode récursive d'estimation de déplacement proposée doit donc distinguer les trois types de points définis et interagir ensuite de façon appropriée. L'initialisation du processus d'estimation doit permettre de retrouver ultérieurement le déplacement de l'objet en commençant par une estimation nulle pour les points traçant le contour de l'objet en mouvement, c'est-à-dire en ne prévoyant pas de vecteur de déplacement, à l'initialisation, pour les points formant ce contour. De tels points doivent donc être classés dans la troisième catégorie de points, celle des points découverts.

Ayant défini un critère de classification, il est également prévu, dans le cadre de l'invention, de minimiser l'erreur de classification due au caractère non optimal de ce critère en examinant, dans une certaine limite par souci de simplicité, l'influence d'un déplacement estimé pour un point sur le déplacement estimé pour les L points suivants. Cette influence peut être observée en construisant à cet effet un arbre de classification dont les branches successives correspondent aux trois groupes possibles auxquels sont supposés appartenir L points successifs (dans le sens du balayage) de l'image. Un tel arbre comprend théoriquement $3^L$ branches, mais par souci de simplicité du dispositif, on a vu qu'on limiterait le nombre des branches observées, appelées par la suite branches survivantes.

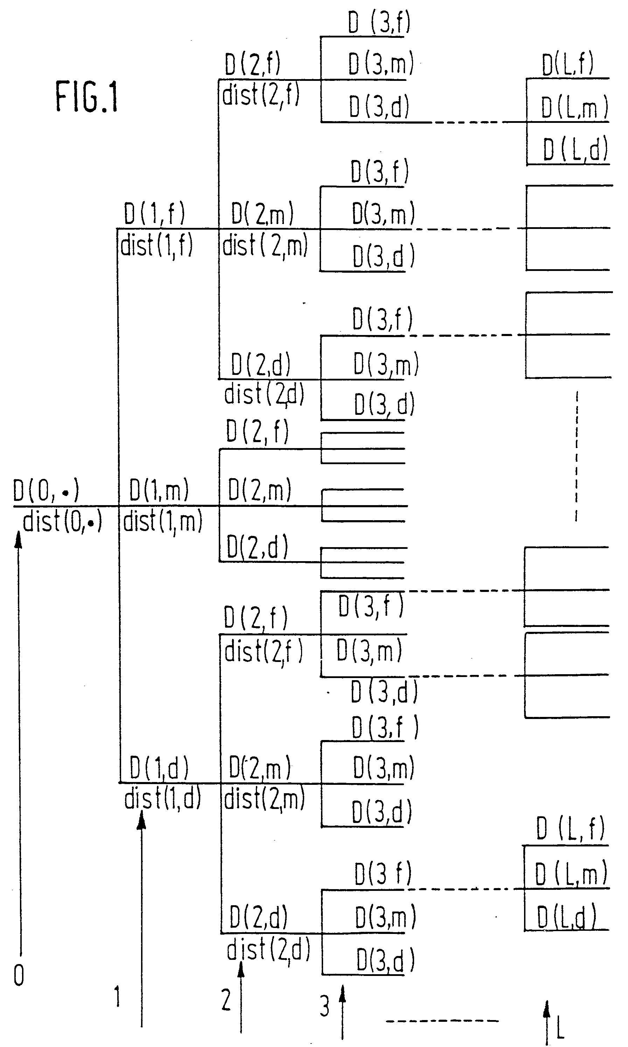

La procédure de construction simplifiée de l'arbre de classification est donc la suivante, en précisant qu'on appellera nœud l'intersection de plusieurs branches et qu'un tel arbre comprendra L niveaux correspondant chacun à un point de l'image. Si l'on part du premier point de l'image, celui-ci peut a priori appartenir à l'un des trois groupes définis (le groupe des points fixes, celui des points mobiles, celui des points découverts). Dans l'arbre de classification représenté sur la figure 1, trois branches relatives à ces trois groupes sont alors créées et, à chaque branche, sont associés deux paramètres.

Le premier de ces paramètres est le vecteur de déplacement noté D (niveau de l'arbre ; groupe possible), le niveau étant compris entre O et L, et le groupe étant représenté par f, m ou d (groupe des points fixes, mobiles, découverts, respectivement). Pour les deux premiers groupes de points, ce vecteur de déplacement dépend de celui qui était associé au nœud précédent (en l'occurrence le nœud zéro pour le premier des L points considérés) et est, par rapport à ce vecteur précédent, réactualisé d'une erreur d'estimation D, à distinguer de l'erreur de classification. Pour le troisième groupe, le vecteur de déplacement est simplement égal à ladite erreur d'estimation, ce qui sous-entend dans ce cas l'initialisation de l'estimateur de mouvement (puisqu'il n'y a pas de vecteur de déplacement précédent) et donc, dans le principe même de la méthode, l'existence d'une rupture du caractère récursif de l'estimation. L'erreur d'estimation est elle-même proportionnelle au produit de la variation spatiale de luminosité du point homologue compte tenu du déplacement dans l'image précédente et de la différence de luminosité entre le point courant et son homologue dans l'image précédente.

Le second de ces paramètres est la distorsion cumulée, notée dist (niveau de l'arbre, groupe possible) comme précédemment. On appelle ainsi, dans la présente description, la somme cumulée des erreurs de classification des points précédents élevées au carré, les groupes de ces points étant ceux des branches parcourues dans l'arbre de classification pour arriver à la branche courante. Sur la figure 1, à chaque branche sont bien entendu associés, à chaque fois un vecteur D(.,.) et une distorsion dist (.,.), mais ces indications n'ont pas été toutes reproduites dès que les subdivisions de l'arbre deviennent nombreuses, afin de ne pas surcharger la figure.

Si l'on prend un exemple, pour le premier point de la séquence d'images traitée, cette distorsion est égale à l'erreur, élevée au carrée, des branches des premiers niveaux de l'arbre. A l'arrivée du deuxième point de l'image, trois branches sont construites dans l'arbre, à l'extrémité de chaque branche du niveau précédent, et les nouveaux paramètres correspondants (vecteur de déplacement, distorsion cumulée) sont calculés. Cette procédure est répétée pour chaque nouveau point de l'image et le nombre des branches est multiplié par trois, du moins tant que ce nombre global reste inférieur à une limite M du nombre de branches autorisées, nettement inférieure au nombre de branches maximal possible pour chaque point. Cette limite est fixée afin de limiter la complexité du dispositif. Dès que ce nombre est dépassé, on ne retient en fait, dans la construction de l'arbre, que les M branches de plus faible distorsion, les branches dites survivantes, alors que les $3^L$-M autres branches sont éliminées, par exemple en imposant à leur distorsion une valeur infinie.

Une telle procédure est poursuivie jusqu'au Lième point de l'image. Après avoir, au terme de cette procédure, retenu les M branches de plus faible distorsion, une décision de type majoritaire est prise quant au groupe effectif et au vecteur de déplacement du premier point de l'image. Cette décision est bien à retardement puisque l'on a attendu d'être informé sur L points d'image supplémentaires avant de prendre ladite décision sur le point considéré précédant ces L points. La décision est prise de la manière suivante : en examinant les branches survivantes, le premier point est classé dans le groupe auquel correspond le plus grand nombre de ces branches survivantes, et le vecteur de déplacement correspondant est alors considéré comme étant le déplacement du premier point, et ainsi de suite... A partir du L-ième point, le procédé permet la détermination, à l'arrivée de chaque nouveau point, d'un groupe et d'un vecteur de déplacement qui correspondent au point précédant ce nouveau point de L points. Pour les L derniers points de l'image, ou plutôt de la séquence d'images quand on a choisi de traiter effectivement toute une séquence (par exemple 25 images en une seconde si l'on a choisi de traiter une seconde d'images), on évite simplement de prendre une décision majoritaire.

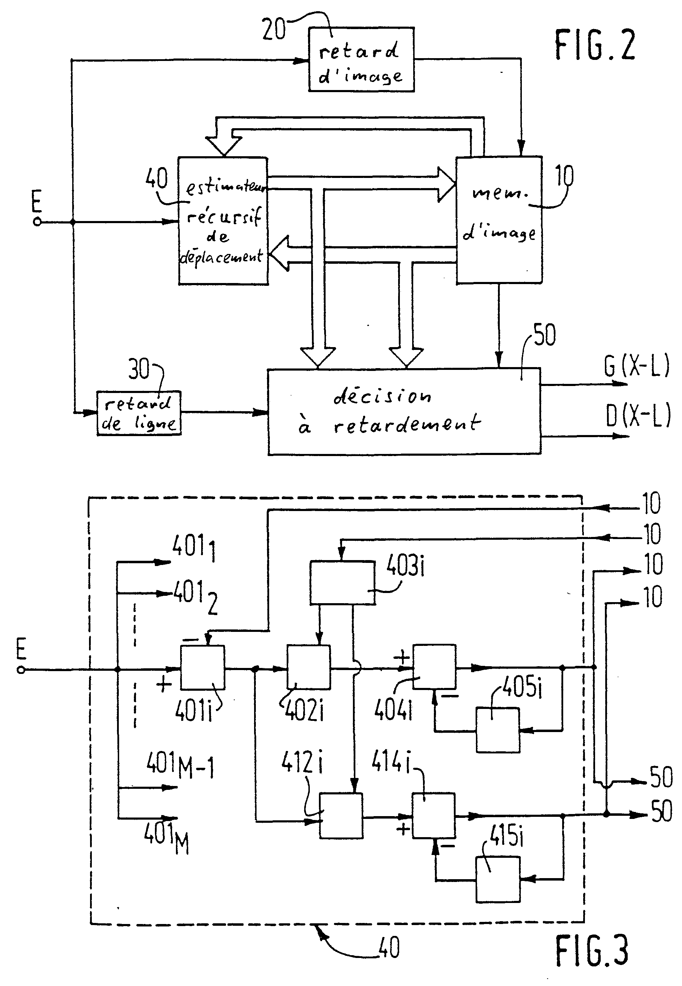

La figure 2 montre un exemple de réalisation d'un dispositif d'estimation permettant la mise en œuvre de l'ensemble de cette procédure. Le dispositif représenté comprend une connexion d'entrée E sur laquelle se présentent les échantillons numériques constituant l'image d'entrée (par exemple à une fréquence d'échantillonnage égale à 13,5 mégahertz dans le cas d'une image vidéo). L'image d'entrée est envoyée d'une part vers une mémoire d'image 10, à laquelle est confié le rôle de sauvegarde de l'image précédente pendant le traitement de l'image courante. Un circuit à retard d'image 20 est donc placé entre la connexion E et l'entrée de la mémoire d'image 10. L'image d'entrée est d'autre part envoyée vers un circuit à retard de ligne 30, qui permet d'accéder au point courant de la ligne précédente de l'image courante (dans le cas des points découverts du troisième groupe). L'image d'entrée est enfin envoyée vers un estimateur récursif de déplacement 40 qui actualise à chaque extension de l'arbre de classification les vecteurs de déplacement relatifs aux nœuds de l'arbre. Ces vecteurs de déplacement sont alors envoyés, en nombre M, vers un circuit de décision à retardement 50 qui en choisit le meilleur, selon le processus de décision majoritaire mentionné plus haut, comme étant l'estimation de déplacement du point considéré, ce circuit 50 déterminant donc un groupe et un vecteur de déplacement par point de séquence d'images, mais cette décision intervenant avec L points de retard. La mémoire d'image 10 destinée à permettre d'accéder aux points de l'image précédente en tenant compte du vecteur de déplacement reçoit en provenance de l'estimateur récursif de déplacement 40 les M vecteurs de déplacement (les mêmes que ceux envoyés vers le circuit 50) concernant les M nœuds successifs de l'arbre de classification et lui fournit une période d'échantillonnage plus tard, après un adressage indirect, la luminosité des points homologues du nouveau point courant X, la désignation X symbolisant les coordonnées m, n du point c'est-à-dire des points X-DEP1, X-DEP-2, ..., X-DEPM de l'image précédente. La mémoire 10 fournit également au circuit 50 cette luminosité desdits points homologues.

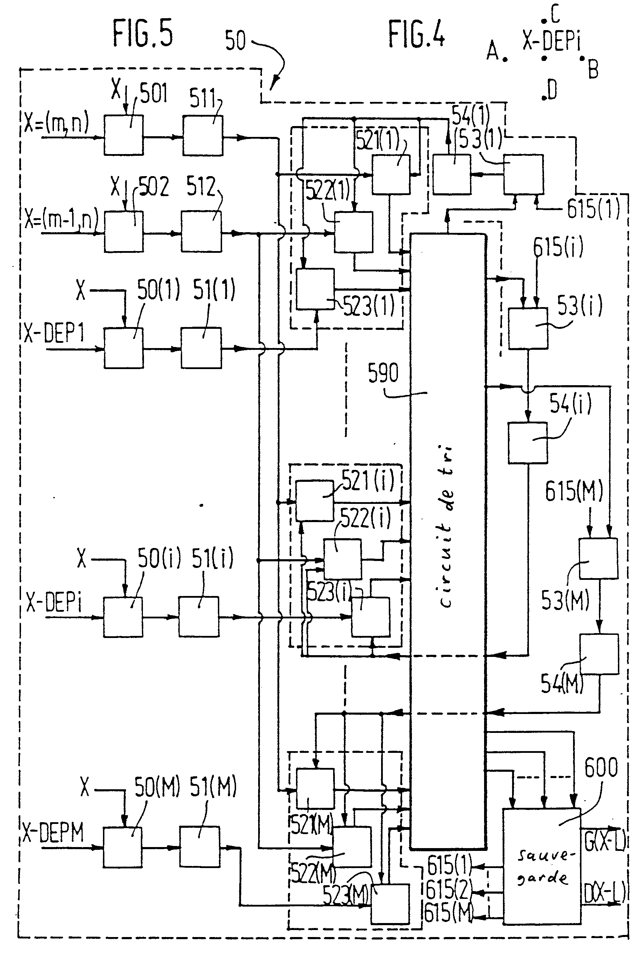

La figure 3 donne un exemple de réalisation de l'estimateur récursif de déplacement 40. Cet estimateur 40 comprend M circuits similaires opérant chacun sur une des M sorties de la mémoire d'image 10, et l'on ne décrira donc que l'un de ces circuits, composé des éléments 401i à 415i (i variant de 1 à M). Un soustracteur 401i reçoit d'une part sur son entrée par exemple positive l'image d'entrée présente sur la connexion d'entrée E et d'autre part sur son entrée négative la sortie de la mémoire d'image 10, c'est-à-dire la i-ième luminosité, et délivre comme signal de différence la différence de luminosité entre le point courant X et le point homologue X-DEPi de l'image précédente. Ce signal de sortie du soustracteur 401i est envoyé vers deux multiplieurs 402i et 412i qui en effectuent le produit par le gradient spatial de la luminosité au point X-DEPi, lui-même délivré sous forme vectorielle (gradient dans la direction m, gradient dans la direction n) par un circuit de gradient 403i qui opère sur la luminosité des points voisins A, B, C, D du point X-DEPi lue dans la mémoire d'image 10. La figure 4 montre ces quatre points A, B, C, D entourant le point X-DEPi dans l'image précédente, et ledit gradient spatial est donné par l'expression :

$$\text{grad}(\text{X-DEPi}) = \frac{1}{2} \begin{bmatrix} A - B \\ C - D \end{bmatrix}$$

Le signal vectoriel de sortie des multiplieurs, qui est l'erreur d'estimation comme on l'a précisé plus haut, est alors traité par deux filtres récursifs sans pondération comprenant respectivement un soustracteur 404i et 414i et un circuit de retard d'un point 405i et 415i. Le circuit 405i (ou 415i) reçoit la sortie du soustracteur 404i (ou 414i) et la réintroduit retardée sur l'entrée négative de ce dernier, dont l'entrée positive reçoit ladite erreur d'estimation et délivre le nouveau vecteur de déplacement associé au point courant X considéré.

Les vecteurs DEP1, DEP2, ..., DEPM ainsi réactualisés sont envoyés d'une part, pour adressage, vers la mémoire d'image 10, où ils prennent la place des précédents, et d'autre part vers le circuit de décision à retardement 50, représenté sur la figure 5 dans un mode particulier de réalisation conforme à l'invention. Ce circuit 50 comprend tout d'abord (M + 2) circuits soustracteurs 501, 502 et 50(1) à 50(M) qui calculent les erreurs de classification, par évaluation de la différence de luminosité entre les points de l'image précédente et les points de l'image courante, sauf pour le soustracteur 502 où cette différence est évaluée entre les points de la ligne précédente et ceux de la ligne courante ; les chiffres entre parenthèses désignent dans les références 50(1) à 50(M) les nœuds de l'arbre de classification. Les valeurs ainsi obtenues sont alors élevées au carré dans les (M + 2) circuits 511, 512, et 51(1) à 51(M). La sortie de ces circuits d'élévation au carré est envoyée vers 3M premiers additionnels 521(1) à 521(M), 522(1) à 522(M), 523(1) à 523(M) de la façon suivante : 511 vers 521(1) à 521(M), 512 vers 522(1) à 522(M), 51(1) à 51(M) vers 523(1) à 523(M) respectivement. Les 3M additionneurs reçoivent sur leur autre entrée les distorsions des nœuds présentes en sortie de M circuits à retard 54(1) à 54(M) eux-mêmes précédés de M additionneurs 53(1) à 53(M). Le rôle de ces additionneurs et circuits à retard est précisé ci-dessous.

Les signaux de sortie des 3M premiers additionneurs représentent alors les distorsions cumulées des 3M branches, avant élimination de 2M branches de plus forte distorsion, et sont envoyés vers le circuit de tri 590. Ce dernier est chargé de trier, parmi ces 3M signaux reçus, ceux qui représentent les M plus faibles valeurs de distorsion cumulée et de les envoyer vers les premières entrées respectives de M

EP 0 224 957 B1

additionneurs 53(1) à 53(M), et de délivrer en plus de ces M valeurs de distorsion et en correspondance à chacune d'elles un indice correspondant au classement qu'elles ont à l'entrée du circuit de tri.

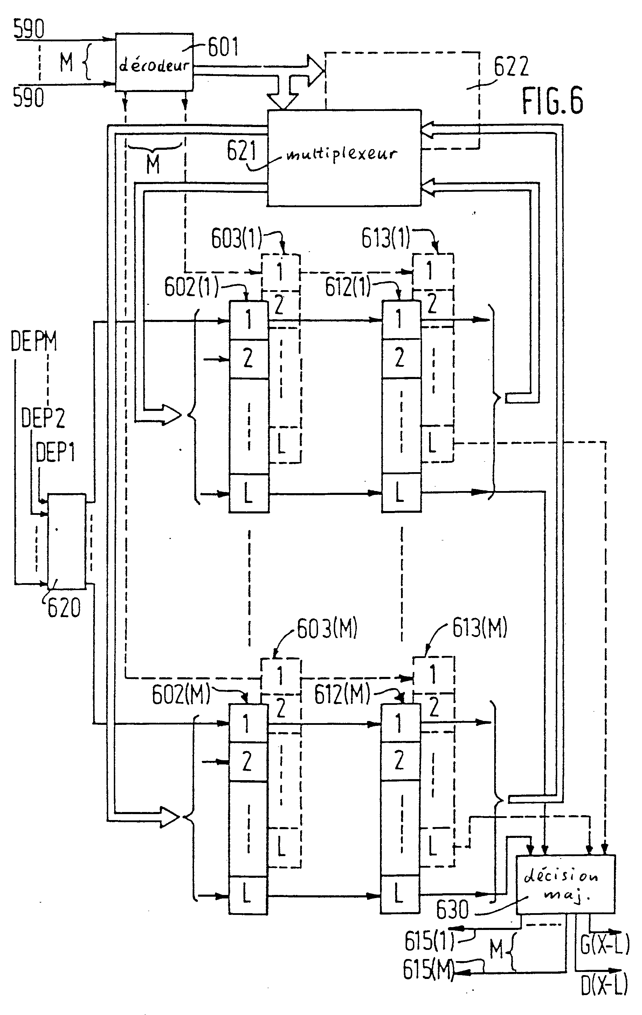

Ces M indices sont ensuite utilisés par un circuit 600 de sauvegarde et de mise à jour de l'arbre de classification. Ce circuit 600, représenté dans un mode particulier de réalisation sur la figure 6, comprend dans le cas présent un circuit décodeur 601 qui extrait les deux informations de numéro de branche (dont on déduit le groupe) et de numéro de nœud, par exemple à l'aide d'une mémoire ROM (mémoire morte ne pouvant qu'être lue ; en anglais Read-Only Memory) programmée de façon à fournir pour chaque adresse comprise entre 1 et 3M un quotient et un reste calculés comme indiqué ci-après : après avoir majoré chaque indice de 2 et divisé chaque indice (ainsi majoré) par trois, on en déduit (a) le quotient, qui indique le numéro de nœud (entre 1 et M) du dernier niveau de l'arbre de classification et (b) le reste, qui est égal à 1/3, 0, ou 2/3, valeurs auxquelles on fait correspondre respectivement le groupe de la branche à laquelle est associée la distorsion, c'est-à-dire le premier groupe des points fixes, le deuxième groupe des points mobiles, ou le troisième groupe des points découverts.

Le circuit de sauvegarde et de mise à jour comprend également 2M registres principaux 602(1), 602(2), ..., 602(M), 603(1), 603(2), ..., 603(M), et 2M registres auxiliaires 612(1), 612(2), ..., 612(M), 613(1), 613(2), ..., 613(M). Ces 4M registres à décalage contiennent chacun L cases destinées à L mots relatifs à la longueur (c'est-à-dire au nombre de niveaux) de l'arbre de classification. Les premiers de ces registres (c'est-à-dire les 2M registres principaux) mémorisent les informations qui concernent le niveau le plus récent (c'est-à-dire le point courant X de l'image) et ainsi de suite. Les M registres principaux 602(1) à 602(M) et les M registres auxiliaires 612(1) à 612(M) mémorisent les vecteurs de déplacement pour les L niveaux successifs de l'arbre de classification, tandis que les M registres principaux 603(1) à 603(M) et les M registres auxiliaires 613(1) à 613(M) mémorisent de même pour les L niveaux successifs les informations de groupe des branches survivantes. Le contenu de ces registres permet de reconfigurer l'arbre de classification de telle sorte que les nœuds soient rangés dans l'ordre décroissant de leur distorsion, cette reconfiguration étant opérée comme on va l'expliquer plus en détail.

Sur la figure 6, on peut voir, d'une part entre le multiplexeur 621 et les registres principaux 602(1) à 602(M) et d'autre part entre les registres auxiliaires 612(1) à 612(M) et ce même multiplexeur, M connexions de transfert respectives, se distinguant des autres tracés de la figure en ce qu'elles sont représentées chacune par une flèche épaissie. Bien entendu, M connexions similaires, qui devraient être représentées de façon rigoureusement identique aux M connexions ci-dessus, existent également d'une part entre le multiplexeur 622 et les registres principaux 603(1) à 603(M) et d'autre part entre les registres auxiliaires 613(1) à 613(M) et ce multiplexeur, pour permettre la réalisation des mêmes fonctions de mémorisation, sauvegarde, mise à jour que celle autorisée par la présence des M premières connexions. Pour simplifier la lecture et la compréhension de cette figure 6, on a cependant volontairement omis de représenter ces M nouvelles connexions de liaison entre les éléments 622, 603(1) à 603(M) et 613(1) à 613(M), et, au lieu de représenter en traits continus lesdits éléments, ils l'ont été en traits interrompus de même que les M connexions conduisant du décodeur 601 aux registres 603(1) à 603(M), les $M \times L$ connexions conduisant des registres 603(1) à 603(M) aux registres 613(1) à 613(M), et les M connexions conduisant des registres 613(1) à 613(M) au circuit de décision majoritaire 630.

Pour la reconfiguration, dans un premier temps, les contenus des 2M registres principaux 602(1) à 602(M) et 603(1) à 603(M) sont transférés respectivement dans les 2M registres auxiliaires 612(1) à 612(M) et 613(1) à 613(M) destinés à sauvegarder l'arbre de classification avant sa réorganisation. Ce transfert rend les 2M registres principaux prêts à recevoir la nouvelle configuration de l'arbre de classification, sans que soit pour autant perdue l'ancienne. Dans un deuxième temps, les contenus des 2M registres auxiliaires 612(1) à 612(M) et 613(1) à 613(M) sont renvoyés par l'intermédiaire des multiplexeurs 621 et 622 (621 pour les vecteurs de déplacement, 622 pour les informations de groupe) vers les 2M registres principaux 602(1) à 602(M) et 603(1) à 603(M), afin de ranger lesdits contenus dans les registres principaux dans l'ordre décroissant des distorsions associées. Les registres principaux 602(K) et 603(K), par exemple, contiennent, après de telles opérations de transfert, respectivement les vecteurs de déplacement et les groupes de la branche d'arbre dont la distorsion est la K-ième dans l'ordre décroissant de celles-ci.

Pour introduire les informations du niveau X concernant le point courant X, les deux opérations suivantes sont en fait nécessaires :

(a) les premiers mots des M registres principaux 603(1) à 603(M) sont chargés par le numéro de groupe des branches de niveau X (niveau relatif au point courant X) qui lui-même provient du circuit décodeur 601, celui-ci ayant en effet fourni le reste de la division par 3 des numéros des M nœuds de plus faible distorsion ;

(b) les vecteurs de déplacement DEP1, DEP2, ..., DEP(M) provenant du circuit 40 par l'intermédiaire d'un circuit de multiplexage 620 sont sauvegardés dans les premiers mots des M registres principaux 602(1) à 602(M) si les branches correspondantes sont associées au groupe des points fixes ou au groupe des points en mouvement, ces mots étant mis à zéro dans le cas contraire (initialisation).

Une décision à retardement va alors être prise par le circuit de décision majoritaire 630. Ce circuit examine en effet les L-ièmes mots des M registres principaux 603(1) à 603(M) et détermine le groupe dont le nombre d'occurrence est le plus grand (c'est-à-dire le groupe qui revient le plus souvent). Si c'est alors le registre 603(K), par exemple, qui mémorise ce groupe, les contenus du L-ième mot des registres

6

principaux 603(K) et 602(K) sont considérés comme étant respectivement le groupe G(X-L) et le vecteur de déplacement D(X-L) du point X-L. Ce sont ces deux informations qui sont fournies en sortie du circuit de décision majoritaire 630, c'est-à-dire, en fait, en sortie du circuit 50 comme l'indique la figure 2. Afin d'éliminer les branches qui ne conduisent pas à ce groupe pour le point X-L de l'image, lorsque le contenu du L-ième mot diffère du groupe décidé (lui-même indiqué dans le L-ième mot du registre 603(K) on donne à la distorsion cumulée une valeur infinie, ou tout au moins très grande, par exemple par addition d'une valeur supérieure à la luminosité maximale de l'image numérisée.

Des signaux 615(1) à 615(M) de sortie du circuit 600, qui sont égaux à la luminosité maximale pour des branches à effacer et nuls pour les autres, sont envoyés vers les deuxièmes entrées respectives des M additionneurs 53(1) à 53(M) suivis des circuits à retards 54(1) à 54(M) respectivement. Ces circuits à retards retardent d'une période d'échantillonnage les signaux qui les traversent. La décision finale étant maintenant prise, les mots des 2M registres principaux 602(1) à 602(M) et 603(1) à 603(M) sont décalés vers le bas, et ces registres sont prêts pour une nouvelle opération de décision à retard, chaque décision étant bien entendu suivie d'un décalage d'une unité des registres principaux et auxiliaires.

## Revendications

1. Procédé d'estimation de mouvement dans une séquence d'images dans laquelle, la luminosité de chaque point étant exprimée de façon numérique, chacun de ces points est défini par deux coordonnées (m, n) indiquant respectivement le rang de la ligne de l'image où se trouve le point et le rang du point sur cette m-ième ligne, caractérisé en ce qu'il consiste à :

(A) prévoir par rapport à l'image courante la sauvegarde de l'image précédente pour constituer une image de référence ;

(B) définir pour les points trois groupes de classification en points fixes, en points mobiles et en points dits découverts, groupes dans lesquels les points vont, avec un retard de L points, être classés au fur et à mesure du balayage de l'image, en examinant un nombre déterminé de séquences de groupes possibles pour les L points qui suivent le point courant X considéré et selon un critère de classification déterminé, ledit critère étant, pour les points fixes et mobiles, la différence de luminosité entre deux images successives, en tenant compte du déplacement des points d'une image à l'autre pour les points mobiles, et, pour les points découverts, la différence de luminosité entre deux lignes adjacentes ;

(C) construire un arbre de classification dont les $3^L$ branches, à chaque niveau successif, sont en nombre égal à celui des groupes possibles et correspondent, du premier au L-ième niveau, aux séquences des groupes possibles pour les L points successifs considérés de la séquence d'images ;

(D) associer à chaque branche de chaque niveau deux paramètres :

(a) un premier paramètre dit vecteur de déplacement, représentatif du déplacement éventuel du point par rapport à l'image ou à la ligne précédente et déterminé à l'aide d'une méthode récursive d'estimation de déplacement ;

(b) un deuxième paramètre dit distorsion cumulée, représentatif de la somme cumulée des erreurs de classification des points précédents, les groupes de ces points étant ceux des branches de l'arbre parcourues pour arriver à la branche courante, chaque erreur de classification étant rendue minimale en tenant compte de l'influence d'un déplacement estimé pour un point sur le déplacement estimé pour les L points suivants, et ladite influence n'étant examinée, parmi les $3^L$ branches possibles de l'arbre, que pour M branches de plus faible distorsion cumulée, dites survivantes, M étant un nombre limite choisi nettement inférieur au nombre maximal de branches $3^L$ ;

(E) au terme de cette procédure portant sur L points, prendre une décision de type majoritaire quant au groupe effectif et au vecteur de déplacement du point situé par rapport au point courant L points plus tôt, ladite décision étant prise en examinant les branches survivantes et en classant chaque point situé L points plus tôt dans le groupe auquel correspond le plus grand nombre de ces branches survivantes, le vecteur de déplacement correspondant étant alors considéré comme le déplacement de ce point situé L points plus tôt, et ladite procédure de décision étant répétée à l'identique sauf pour les L derniers points de la séquence d'images où l'on évite de prendre une décision.

2. Dispositif d'estimation de mouvement dans une séquence d'images, prévu pour la mise en œuvre du procédé selon la revendication 1 et caractérisé en ce qu'il comprend une mémoire d'image (10) recevant de la connexion d'entrée, par l'intermédiaire d'un circuit à retard d'image (20), la séquence d'images numérisée, un circuit à retard de ligne (30) recevant également la séquence d'images numérisée, et un estimateur récursif de déplacement d'images numérisée, et un estimateur récursif de déplacement (40), recevant également la séquence d'images numérisée pour actualiser à chaque extension de l'arbre de classification les vecteurs de déplacements relatifs aux nœuds de l'arbre et les envoyer vers un circuit de décision à retardement (50), lesdits vecteurs étant également envoyés vers la mémoire d'image qui renvoie audit estimateur et audit circuit de décision la luminosité des points homologues du point courant X dans l'image précédente.

3. Dispositif selon la revendication 2, caractérisé en ce que le circuit de décision à retardement (50) comprend :

(A) (M+2) circuits soustracteurs (501, 502, 50 (1) à 50 (M)) dont le premier et les M derniers calculent les erreurs de classification par évaluation de la différence de luminosité entre les points de l'image précédente et ceux de l'image courante, le deuxième soustracteur calculant cette erreur par évaluation de cette différence entre les points de la ligne précédente et ceux de la ligne courante ;

(B) $(M + 2)$ circuits d'élévation au carré (511, 512, 51 (1) à 51 (M)) de la sortie des soustracteurs ;

(C) 3 M additionneurs (521 (1) à 521 (M), 522 (1) à 522 (M), 523 (1) à 523 (M)) dont les signaux de sortie représentent les distorsions cumulées des 3M branches de l'arbre de classification ;

(D) un circuit de tri (590) recevant ces 3M signaux de sortie et délivrant parmi ceux-ci ceux qui représentent les M plus faibles valeurs de distorsion cumulée, ces M signaux sélectionnés étant accompagnés d'un indice correspondant au classement qu'ont ces signaux à l'entrée du circuit de tri ;

(E) un circuit de sauvegarde et de mise à jour (600) de l'arbre de classification recevant d'une part lesdits M indices sélectionnés et d'autre part les vecteurs de déplacement pour les L niveaux successifs de l'arbre de classification et délivrant, pour le point précédant de L points le point courant X, les informations relatives à son groupe et à son vecteur de déplacement.

4. Dispositif selon la revendication 3, caractérisé en ce que le circuit de sauvegarde et de mise à jour (600) comprend :

(A) un premier jeu de M registres principaux (602 (1) à 602 (M)) et de M registres auxiliaires (612 (1) à 612 (M)) tous de L cases, respectivement prévus les premiers pour la mémorisation des vecteurs de déplacement provenant de l'estimateur récursif de déplacement par l'intermédiaire d'un circuit de multiplexage et les seconds pour la sauvegarde, avant réorganisation, de ces vecteurs et le retour de ceux-ci, après réorganisation dans l'ordre décroissant des distorsions, vers lesdits registres principaux par l'intermédiaire d'un premier multiplexeur ;

(B) un deuxième jeu de M registres principaux (603 (1) à 603 (M)) et de M registres auxiliaires (613 (1) à 613 (M)), tous de L cases, respectivement prévus, de même, les premiers pour la mémorisation des informations de groupe des branches survivantes, provenant du circuit de tri par l'intermédiaire d'un décodeur, pour les L niveaux successifs, et les seconds pour la sauvegarde, avant réorganisation, de ces informations de groupe et le retour de celles-ci, après réorganisation dans l'ordre décroissant des distorsions, vers lesdits registres principaux par l'intermédiaire d'un deuxième multiplexeur ;

(C) un circuit de décision majoritaire (630) destiné à recevoir les contenus des L-ièmes mots des registres et à déterminer le groupe dont le nombre d'occurrence est le plus grand, le contenu de celui des registres qui mémorise ce groupe étant alors considéré comme le groupe G(X-L) du point précédant de L points le point courant X, et le vecteur de déplacement contenu dans le registre principal correspondant étant considéré de même comme le vecteur de déplacement D(X-L) dudit point précédant de L points le point courant X, et chacune des décisions prise par ledit circuit de décision majoritaire étant suivie d'un décalage d'une unité des registres principaux et auxiliaires.

## Claims

1. A method of estimating motion in a picture sequence in which the luminosity of each element is expressed in a digital form and each of these elements is defined by two coordinates (m, n), respectively, indicating the number of the picture line in which the element is present and the number of the element on this $m^{th}$ line, characterized in that it consists of :

(A) preserving the preceding picture with respect to the current picture for constituting a reference picture ;

(B) defining for each element three classifying groups of fixed elements, moving elements and elements referred to as exposed elements, in which groups the elements are classified with a delay of L elements according to scanning of the picture by examining a given number of possible group sequences for the L elements succeeding the current element X considered and in accordance with a given classification criterion, said criterion for the fixed and moving elements being the difference in luminosity between two successive pictures, taking the displacement of the elements of one picture with respect to the other into account for the moving elements, and the difference in luminosity between two adjacent lines for the exposed elements ;

(C) constructing a classification tree whose $3^L$ branches at each successive level are equal in number to those of the possible groups and which correspond from the first to the $L^{th}$ level to the sequences of possible groups for the L considered successive elements of the picture sequence ;

(D) associating two parameters with each branch of each level :

(a) a first parameter referred to as displacement vector representative of the possible displacement of the element with respect to the picture or to the preceding line and determined by means of a recursive displacement estimation method ;

(b) a second parameter referred to as cumulated distorsion representative of the cumulative sum of the classification errors of the preceding elements, the groups of these elements being those of the tree branches traverse to arrive at the current branch, each classification error being rendered minimum by taking into account the influence of a displacement estimated for an element on the displacement estimated for the L following elements, said influence being only examined, among the $3^L$ possible branches of the tree, for M branches of the weakest cumulated distortion referred to as surviving branches, where M is a limited number choisen to be substantially smaller than the maximum number of branches 3L ;

(E) in accordance with this procedure relating to L elements, taking a decision of the majority type concerning the effective group and concerning the displacement vector of the element situated L elements earlier with respect to the current element, said decision being taken by examining the surviving branches and by classifying each element situated L elements earlier in the group to which the largest number of these surviving branches corresponds, the corresponding displacement vector being thus considered as the displacement of this element situated L elements earlier, said decision procedure being identically repeated but for the L last elements of the picture sequence in which one avoids taking a decision.

2. A device for estimating motion in a picture sequence provided for carrying out the method as claimed in Claim 1 and characterized in that it comprises a picture memory (10) receiving the numbered picture sequence from its input connection via a picture delay circuit (20), a line delay circuit (30) also receiving the numbered picture sequence and a recursive displacement estimator (40) also receiving the numbered picture sequence for updating at each extension of the classification tree the displacement vectors relative to the nodes of the tree and for applying them to a delay decision circuit (50), said vectors being also applied to the picture memory which returns the luminosity of the homologue elements of the current element X in the preceding picture to the said estimator and the said decision circuit.

3. A device as claimed in Claim 2, characterized in that the delay. decision circuit (50) comprises :

(A) (M + 2) subtractor circuits (501, 502, 50 (1) to 50 (M)) of which the first and the M last calculate the classification errors by estimating the difference in luminosity between the element of the preceding picture and those of the current picture, the second subtractor calculating said error by estimating this difference between the elements of the preceding line and those of the current line ;

(B) (M + 2) circuits (511, 512, 51 (1) to 51(M)) for squaring the output signals of the subtractors ;

(C) 3M adders (521(1) to 521(M), 522(1) to 522(M), 523(1) to 523(M)) whose output signals represent the cumulated distortions of the 3M branches of the classification tree ;

(D) a sorting circuit (590) receiving these 3M output signals and delivering among these signals those which represent the M weakest values of the cumulated distortion, said M selected signals being accompanied by an index corresponding to the classification of these signals at the inputs of the sorting circuit ;

(E) a circuit (600) for preserving and updating the classification tree receiving at one end the said M selected indices and at the other end the displacement vectors for the L successive levels of the classification tree and supplying for the element preceding the current element X by L elements the data relative to its group and its displacement vector.

4. A device as claimed in Claim 3, characterized in that the preservation and updating circuit (600) comprises :

(A) a first set of M principal registers (602(1) to 602(M)) and M auxiliary registers (612(1) to 612(M)) all having L positions, the first being provided for memorisation of the displacement vectors originating from the recursive displacement estimator by means of a multiplier circuit and the second being provided for the preservation of these vectors before reorganisation and the return of these vectors after reorganisation in a decreasing order of the distortions to the said principal registers by means of a first multiplier ;

(B) a second set of M principal registers (603(1) to 603(M)) and M auxiliary registers (613(1) to 603(M)) and M auxiliary registers (613(1) to 613(M)) all having L positions, the first being likewise provided for the memorisation of the data from the group of surviving branches originating from the sorting circuit by means of a decoder for the L successive levels, and the second being provided for the preservation of these data of the group before reorganisation and the return of these data after reorganisation in a decreasing order of the distorsions to the said principal registers by means of a second multiplier ;

(C) a majority decision circuit (630) intended to receive the contents of the $L^{th}$ words of the registers and to determine the group whose number of occurrence is the largest, the contents of those of the registers which memorizes this group being considered as the group G(X-L) of the element preceding the current element X by L elements, and the displacement vector in the corresponding principal register being also considered as the displacement vector D(X-L) of the said element preceding the current element X by L elements, and each of the decisions taken by the said majority decision circuit being followed by a shift by one unit of the principal and auxiliary registers.

**Patentansprüche**

1. Verfahren zur Bewegungsabschätzung in einer Bildfolge, in der die Helligkeit jedes Punktes auf digitale Weise ausgedrückt wird, wobei jeder dieser Punkte durch zwei Koordinaten (m, n) definiert ist, die den Rang der Zeile, auf der sich der Punkt befindet, bzw. den Rang des Punktes auf dieser m. Zeile bezeichnen, dadurch gekennzeichnet, daß dieses Verfahren die folgenden Verfahrensschritte umfasst :

(A) das Aufbewahren des vorhergehenden Bildes gegenüber dem augenblicklichen Bild zum Erzeugen eines Bezugsbildes ;

(B) das Definieren von drei Punkt-Klassifikationsgruppen, und zwar in feste Punkte, bewegliche Punkte und sog. freie Punkte, wobei die Punkte mit einer Verzögerung entsprechend L Punkten je nach Abtastung des Bildes klassiert werden, und zwar durch Überprüfung einer bestimmten Anzahl möglicher Gruppenfolgen für die dem augenblicklichen Punkt x folgenden L Punkte und entsprechend einem bestimmten Klassifikationskriterium, wobei dieses Kriterium für die festen und beweglichen Punkte der Helligkeitsunterschied zwischen zwei aufeinanderfolgenden Bildern ist, dies unter Berücksichtigung der Verschiebung der Punkte vom einen Bild zum anderen für die beweglichen Punkte und für die freien Punkte, der Helligkeitsunterschied zwischen zwei benachbarten Zeilen ;

(C) das Konstruieren eines Klassifikationsbaumes dessen $3^L$ Zweige auf jedem folgenden Pegel in der Zahl der Anzahl möglichen Gruppen gleich sind und von dem ersten zu dem L. Pegel den Folgen der möglichen Gruppen für die L betreffenden aufeinanderfolgenden Gruppen der Bildfolge entsprechen ;

(D) das Zuordnen zweier Parameter zu jedem Zweig jedes Pegels :

(a) einen ersten Parameter, als Verschiebungsvektor bezeichnet, der für die etwaige Verschiebung des Punktes gegenüber einem vorhergehenden Bild oder einer vorhergehenden Zeile repräsentativ ist und mit Hilfe eines Verfahrens zur rekursiven Bewegungsabschätzung ermittelt wird ;

(b) einen zweiten Parameter, als summierte Verzerrung bezeichnet, der für die Summe der Klassifikationsfehler der vorhergehenden Punkte repräsentativ ist, wobei die Gruppen dieser Punkte diejenigen der Baumzweige sind, die durchlaufen wurden um zu der augenblicklichen Zweig zu gelangen, wobei jeder Klassifikationsfehler minimal gemacht wird, dies unter Berücksichtigung des Einflußes einer geschätzten Bewegung für die L nachfolgen Punkte, und wobei dieser Einfluß unter den $S^L$ möglichen Baumzweigen nur für M Zweige mit der geringsten summierten Verzerrung, als überlebend bezeichnet, untersucht wird, wobei M eine beschränkte Zahl ist, im wesentlichen gewählt unterhalb der maximalen Anzahl Zweige $3^L$ ;

(E) entsprechend diesem Verfahren in bezug auf L Punkte das Treffen einer Entscheidung vom Majoritätstyp in bezug auf die effektive Gruppe und auf den Bewegungsvektor des Punktes, der gegenüber dem augenblicklichen Punkt um L Punkte früher liegt, wobei diese Entscheidung beim Untersuchen der überlebenden Zweige und beim Klassieren jedes Punktes, der um L Punkte in der Gruppe früher liegt, der die größte Anzahl überlebender Zweige entspricht, getroffen wird, wobei der entsprechende Bewegungsvektor auf diese Weise als die Bewegung dieses um L Punkte früher liegenden Punktes betrachtet werden kann, und wobei das genannte Entscheidungsverfahren auf identische Weise wiederholt wird mit Ausnahme für die L letzten Punkte der Bildfolge, bei denen das Treffen einer Entscheidung vermieden wird.

2. Anordnung zum Abschätzen einer Bewegung in einer Bildfolge zum Gebrauch bei dem Verfahren nach Anspruch 1 und dadurch gekennzeichnet, daß diese Anordnung einen Bildspeicher (10) aufweist, der von dem Eingang über eine Bildverzögerungsschaltung (20) die numerierte Bildfolge erhält, weiterhin eine Zeilenverzögerungsschaltung (30), die ebenfalls die numerierte Bildfolge erhält, und einer rekursive Bewegungsabschätzanordnung (40), die ebenfalls die numerierte Bildfolge erhält zum an jeder Erweiterung des Klassifikationsbaumes aktualisieren der Bewegungsvektoren in bezug auf die Knoten des Baumes und zum Zuführen derselben zu einer Verzögerungsentscheidungsschaltung (50), wobei diese Vektoren ebenfalls dem Bildspeicher zugeführt werden, der die Helligkeit der dem Punkt X in dem vorhergehenden Bild entsprechenden Punkte zu der Schätzungsschaltung und der Entscheidungsschaltung zurückgibt.

3. Anordnung nach Anspruch 2, dadurch gekennzeichnet, daß die Verzögerungsentscheidungsschaltung (50) die folgenden Elemente aufweist :

(A) (M + 2) Substrahierschaltungen (501, 502, 50(1) bis 50(M)), von denen die erste und die M letzteren die Klassifikationsfehler berechnen, und zwar durch Bewertung des Helligkeitsunterschiedes zwischen den Punkten des vorhergehenden Bildes und denen des augenblicklichen Bildes, wobei die zweite Substrahierschaltung diesen Fehler durch Bewertung dieses Unterschiedes zwischen den Punkten der vorhergehenden Zeile und denen der augenblicklichen Zeile berechnet ;

(B) (M + 2) Quadrierschaltungen (511, 512, 51(1) bis 51(M)), zum Quadrieren der Ausgangssignale der Substrahierschaltungen ;

(C) 3 M Addierschaltungen (521(1) bis 521(M), 522(1) bis 522(M), 523(1) bis 523(M)), deren Ausgangssignale die summierten Verzerrungen der 3M Zweige des Klassifikationsbaumes darstellen ;

(D) eine Sortierschaltung (590), welche die 3M Ausgangssignale erhält und unter denen diejenigen, welche die M nidrigsten Werte der summirten Verzerrung darstellen, wobei diese M selektierten Signale mit einem Index versehen sind, der der Klassifikation entspricht, die diese Signale am Eingang der Sortierschaltung aufweisen ;

(E) eine Aufbewahrungs- und Aktualisierungsschaltung (600) für den Klassifikationsbaum, die einerseits die genannten M selektierten Indizen und andererseits die Bewegungsvektoren für die L aufeinanderfolgenden Pegel des Klassifikationsbaumes erhält und die für den Punkt, der L Punkte vor dem augeblicklichen Punkt X liegt, die Informationen betreffs der Gruppe und des Bewegungsvektors liefert.

4. Anordnung nach Anspruch 3, dadurch gekennzeichnet, daß die Aufbewahrungs- und Aktualisierungsschaltung (600) die folgenden Elemente aufweist :

(A) einen ersten Satz von M Hauptregistern (602(1) bis 602(M)) und M Hilfsregistern (612(1) bis 612(M)) mit je L Fächern, wobei die ersten zum Speichern der Bewegungsvektoren vorgesehen sind, die mittels eines Multiplexers von der rekursiven Bewegungsschätzungsschaltung herrühren, und die zweiten zum Aufbewahren, vor der Reorganisation, dieser Vektoren und zum Zurückführen derselben, nach der Reorganisation, in abnehmender Ordnung von Verzerrungen zu den genannten Hauptregistern mittels eines ersten Multiplexers ;

(B) eine zweiten Satz von M Hauptregistern (603(1) bis 603(M)) und M Hilfsregistern (613(1) bis 613(M)), mit je L Fächern, wobei ebenfalls die ersten zum Speichern der Informationen betreffs der Gruppe der überlebenden Zweige vorgesehen sind, die mittels eines Dekoders von der Sortierschaltung herrühren, für die L aufeianderfolgenden Pegel, und die zweiten zum Aufbewharen, vor der Reorganisation, dieser Informationen der Gruppe und zum Zurückführen derselben, nach der Reorganization, in abnehmender Ordnung von Verzerrungen, zu den genannten Hauptregistern mittels eies zweiten Multiplexers ;

(C) eine Majoritätsentscheidungsschaltung (630) zum Erhalten des Inhaltes der L. Worte der Register und zum Ermitteln der Gruppe mit der höchsten Anzahl Auftritte, wobei der Inhalt desjenigen Registers, das diese Gruppe speichert, als die Gruppe G(X-L) desjenigen Punktes betrachtet wird, der L Punkte vor dem augenblicklichen Punkt X liegt, und wobei der Bewegungsvektor in dem entsprechenden Hauptregister als der Bewegungsvektor D(X-L) des genannten, L Punkte vor dem augenblicklichen Punkt X liegenden Punktes betrachtet wird und wobei allen von der genannten Majoritätsentscheidungsschaltung getroffenen Entscheidungen eine Verschiebung um eine Einheit der Haupt- und Hilfsregister folgt.

FIG.1

EP 0 224 957 B1

FIG.2

retard d'image — 20

estimateur récursif de déplacement — 40

mem. d'image — 10

E

retard de ligne — 30

décision à retardement — 50

G (X-L)

D (X-L)

FIG.3

$401_1$

$401_2$

$403i$

E

$401i$

$402i$

$404i$

$405i$

$401M-1$

$401M$

$412 i$

$414 i$

$415i$

10

10

10

10

50

50

40

FIG.5    50    FIG.4

FIG.6